# EUROPEAN PATENT APPLICATION

(11) **EP 4 277 028 A1**
(43) Date of publication of application: **15.11.2023**
(21) Application number: 22762359.2
(22) Date of filing: 10.02.2022
(51) Int. Cl.: H01Q 1/36

(54) **ANTENNA ASSEMBLY AND ELECTRONIC DEVICE**

(30) Priority: 03.03.2021 CN 202110237419
(71) Applicant: GUANGDONG OPPO MOBILE TELECOMMUNICATIONS CORP., LTD., Dongguan, Guangdong 523860 (CN)
(72) Inventor: WU, Xiaopu, Dongguan, Guangdong 523860 (CN)
(74) Representative: Novagraaf Technologies
(86) International application number: PCT/CN2022/075871
(87) International publication number: WO 2022/183892

(57) **Abstract**

Disclosed in the present disclosure are an antenna assembly and an electronic device. The antenna assembly comprises a radiator, a first matching circuit and a signal source. The radiator comprises a first sub-radiator and a second sub-radiator, wherein a coupling gap is present between the first sub-radiator and the second sub-radiator, and the first sub-radiator and the second sub-radiator are coupled to each other by means of the coupling gap; the first sub-radiator comprises a free end, a first coupling end, and a grounding point and a feeding point, which are arranged between the free end and the first coupling end, the grounding point being grounded, and the feeding point being located between the grounding point and the first coupling end; and the second sub-radiator comprises a second coupling end and a grounding end, a coupling gap is present between the first coupling end and the second coupling end, and the grounding end is grounded. One end of the first matching circuit is electrically connected to the feeding point. The signal source is electrically connected to the other end of the first matching circuit. Provided in the present disclosure are an antenna assembly and an electronic device, which improve the data transmission rate and the communication quality.

## Description

The present application claims the priority of Chinese Patent Application No. 2021102374199, entitled "ANTENNA ASSEMBLY AND ELECTRONIC DEVICE", filed March 03, 2021, which is herein incorporated by reference in its entirety.

### TECHNICAL FIELD

The present disclosure relates to the field of communication technologies, and in particular to an antenna assembly and an electronic device.

### BACKGROUND

With the development of communication technology, the popularity of an electronic device with communication function is higher and higher, and the requirement for a network access speed is higher and higher. Therefore, how to improve data transmission rate of the electronic device and improve communication quality of the electronic device becomes a technical problem to be solved.

### SUMMARY OF THE DISCLOSURE

The present disclosure provides an antenna assembly and an electronic device which improve data transmission rate and improve communication quality.

In a first aspect, an embodiment of the present disclosure provides an antenna assembly including a radiator, a first matching circuit, and a signal source. The radiator includes a first sub-radiator and a second sub-radiator, wherein a coupling gap is between the first sub-radiator and the second sub-radiator, and the first sub-radiator and the second sub-radiator are coupled through the coupling gap; the first sub-radiator includes a free end, a first coupling end, a grounding point and a feeding point; the grounding point and the feeding point are disposed between the free end and the first coupling end, the grounding point is grounded, and the feeding point is located between the grounding point and the first coupling end; and the second sub-radiator includes a second coupling end and a grounding end, the coupling gap is formed between the second coupling end and the first coupling end, and the grounding end is grounded. One end of the first matching circuit is electrically connected to the feeding point. The signal source is electrically connected to the other end of the first matching circuit.

In a second aspect, an embodiment of the present disclosure provides an electronic device including a housing and the antenna assembly mentioned above, wherein the radiator is disposed on or in the housing.

In the antenna assembly and the electronic device provided by the present disclosure, the grounding point of the first sub-radiator is located between the two ends of the first sub-radiator, and the second sub-radiator is capacitively coupled to the first sub-radiator, so that the currents of the first sub-radiator and the second sub-radiator have several distribution modes to produce several resonance modes. Thus, the antenna assembly can support relatively wide bandwidth, thereby improving throughput and data transmission rate of the antenna assembly when the antenna assembly is applied to the electronic device and improving the communication quality of the electronic device.

### BRIEF DESCRIPTION OF THE DRAWINGS

In order to more clearly illustrate the technical solutions of the embodiments of the present disclosure, The accompanying drawings required to be used in the embodiments will be briefly introduced below. Obviously, the accompanying drawings in the following description are only some embodiments of the present disclosure. For one of ordinary skill in the art, other accompanying drawings can also be obtained according to the accompanying drawings without any creative efforts.
FIG. 1 is a structural schematic view of an electronic device according to an embodiment of the present disclosure.
FIG. 2 is an exploded structural schematic view of the electronic device as shown in FIG. 1.
FIG. 3 is a structural schematic view of a first kind of antenna assembly according to an embodiment of the present disclosure.
FIG. 4 is a schematic view of multiple resonance modes generated by the antenna assembly provided in FIG. 3.
FIG. 5 is a schematic view of a first current distribution of the antenna assembly provided in FIG. 3.
FIG. 6 is a schematic view of a first current density distribution of the antenna assembly provided in FIG. 3.
FIG. 7 is a schematic view of a second current distribution of the antenna assembly provided in FIG. 3.
FIG. 8 is a schematic view of a second current density distribution of the antenna assembly provided in FIG. 3.
FIG. 9 is a schematic view of a third current distribution of the antenna assembly provided in FIG. 3.
FIG. 10 is a schematic view of a third current density distribution of the antenna assembly provided in FIG. 3.
FIG. 11 is a graph of the radiation efficiency of the antenna assembly provided in FIG. 3.
FIG. 12 is a structural schematic view of a first kind of first matching circuit according to an embodiment of the present disclosure.
FIG. 13 is a structural schematic view of a second kind of first matching circuit according to an embodiment of the present disclosure.
FIG. 14 is a structural schematic view of a third kind of first matching circuit according to an embodiment of the present disclosure.
FIG. 15 is a structural schematic view of a fourth kind of first matching circuit according to an embodiment of the present disclosure.
FIG. 16 is a structural schematic view of a fifth kind of first matching circuit according to an embodiment of the present disclosure.
FIG. 17 is a structural schematic view of a sixth kind of first matching circuit according to an embodiment of the present disclosure.
FIG. 18 is a structural schematic view of a seventh kind of first matching circuit according to an embodiment of the present disclosure.
FIG. 19 is a structural schematic view of an eighth kind of first matching circuit according to an embodiment of the present disclosure.
FIG. 20 is a structural schematic view of a second kind of antenna assembly according to an embodiment of the present disclosure.
FIG. 21 is a structural schematic view of a third kind of antenna assembly according to an embodiment of the present disclosure.
FIG. 22 is a structural schematic view of a fourth kind of antenna assembly according to an embodiment of the present disclosure.
FIG. 23 is a structural schematic view of a fifth kind of antenna assembly according to an embodiment of the present disclosure.
FIG. 24 is a structural schematic view of a sixth kind of antenna assembly according to an embodiment of the present disclosure.
FIG. 25 is a structural schematic view of a first kind of arrangement position of the antenna assembly according to an embodiment of the present disclosure.
FIG. 26 is a structural schematic view of a second kind of arrangement position of the antenna assembly according to an embodiment of the present disclosure.
FIG. 27 is a structural schematic view of a third kind of arrangement position of the antenna assembly according to an embodiment of the present disclosure.
FIG. 28 is a structural schematic view of the frame provided in FIG. 2.
FIG. 29 is a structural schematic view of a first kind of arrangement manner of the antenna assembly and the frame according to an embodiment of the present disclosure.
FIG. 30 is a structural schematic view of a second kind of arrangement manner of the antenna assembly and the frame according to an embodiment of the present disclosure.

### DETAILED DESCRIPTION

The following will be combined with the accompanying drawings in the embodiments of the present disclosure, the technical solutions in the embodiments of the present disclosure are clearly and completely described. Obviously, the described embodiments are merely a part of the embodiments of the present disclosure, and not all embodiments. Reference herein to an "embodiment" or "example" means, particular features, structures, or characteristics described in connection with embodiments may be included in at least an embodiment of the present disclosure. The phrase appearing in various positions in the specification does not necessarily refer to the same embodiment, nor is it an independent or alternative embodiment that is mutually exclusive with other embodiments. One of ordinary skill in the art explicitly and implicitly understands that the embodiments described in present disclosure can be combined with other embodiments.

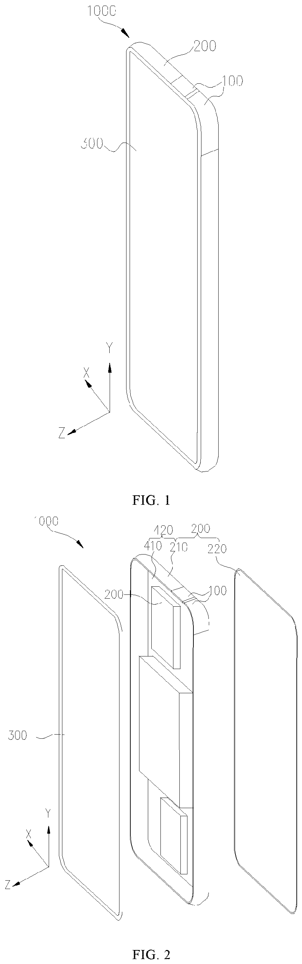

Referring to FIG. 1, FIG. 1 is a structural schematic view of an electronic device according to an embodiment of the present disclosure. The electronic device 1000 includes an antenna assembly 100. The antenna assembly 100 is configured to receive and transmit electromagnetic wave signals for achieving communication functions of the electronic device 1000. In the present disclosure, the position of the antenna assembly 100 in the electronic device 1000 is not specifically limited. The electronic device 1000 further includes a display screen 300 and a housing 200 that are connected to each other in a covering manner. The antenna assembly 100 can be arranged inside the housing 200 of the electronic device 1000, or a part of the antenna assembly is integrated with the housing 200, or a part of the antenna assembly is arranged outside of the housing 200. The antenna assembly 100 may also be disposed on a retractable assembly of the electronic device 1000. In other words, at least a part of the antenna assembly 100 may extend out of the electronic device 1000 with the retractable assembly of the electronic device 1000, and retract into the electronic device 1000 with the retractable assembly. Alternatively, the overall length of the antenna assembly 100 extends with the extension of the retractable assembly of the electronic device 1000.

The electronic device 1000 includes, but is not limited to a device capable of transmitting and receiving electromagnetic wave signals, such as, a phone, a television, a tablet, a cellphone, a camera, a personal computer, a laptop, a vehicle-mounted device, a headset, a watch, a wearable device, a base station, a vehicle-mounted radar, a customer premise equipment (CPE), and so on. In the present disclosure, taking the electronic device 1000 being a mobile phone as an example, and other devices can refer to the detailed description in the present disclosure.

For convenience of description, taking the view angle of the electronic device 1000 in FIG. 1 as a reference, the width direction of the electronic device 1000 is defined as an X-axis direction, the length direction of the electronic device 1000 is defined as a Y-axis direction, and the thickness direction of the electronic device 1000 is defined as a Z-axis direction. The X-axis direction, the Y-axis direction and the Z-axis direction are perpendicular to each other, and the direction indicated by the arrow is a positive direction.

Referring to FIG. 2, the housing 200 includes a frame 210 and a rear cover 220. A middle plate 410 is formed in the frame 210 by injection molding. A plurality of mounting grooves for mounting various electronic elements are formed in the middle plate 410, and the middle plate 410 and the frame 210 together form a middle frame 420 of the electronic device 100. After the display screen 300, the middle frame 420 and the rear cover 220 are closed, receiving spaces are formed on both sides of the middle frame 420. The electronic device 1000 further includes a battery, a camera, a microphone, a receiver, a speaker, a face recognition module, a fingerprint recognition module, and other elements capable of implementing basic functions of the mobile phone, which are disposed in the receiving spaces, and are not described in detail in this embodiment.

The antenna assembly 100 provided by the present disclosure is specifically described below with reference to the accompanying drawings. Of course, the antenna assembly 100 provided by the present disclosure includes but is not limited to the following embodiments.

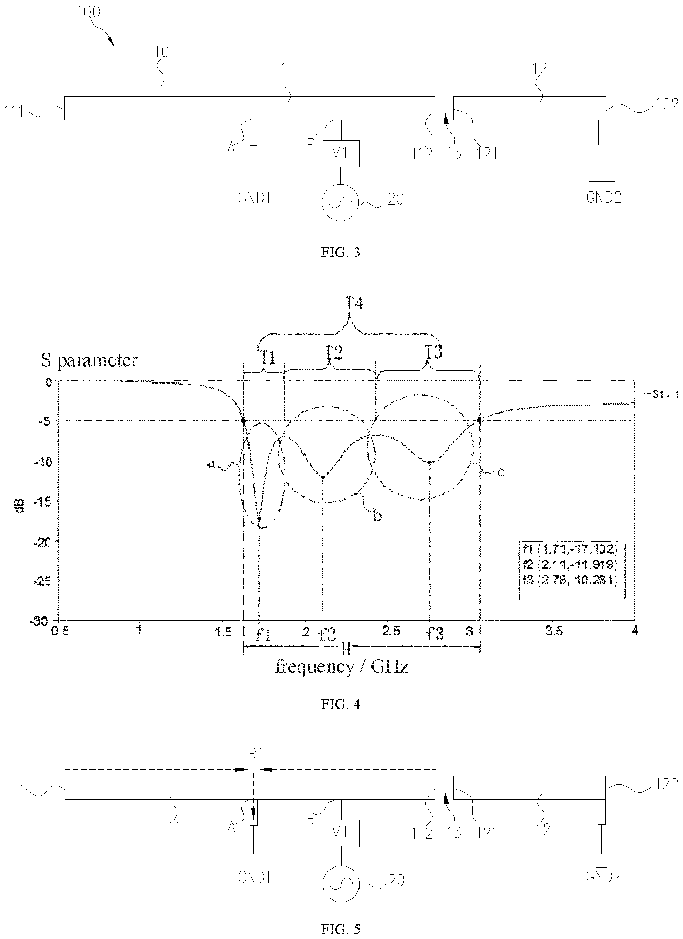

Referring to FIG. 3, the antenna assembly 100 includes at least a radiator 10, a first matching circuit M1 and a signal source 20.

Referring to FIG. 3, the radiator 10 includes a first sub-radiator 11 and a second sub-radiator 12. A coupling gap 13 exists between the first sub-radiator 11 and the second sub-radiator 12. The first sub-radiator 11 and the second sub-radiator 12 are coupled through the coupling gap 13. In an embodiment, the shapes of the first sub-radiator 11 and the second sub-radiator 12 are a straight strip. In other embodiments, the first sub-radiator 11 and the second sub-radiator 12 may also be in the shape of a bent strip or other shapes.

Referring to FIG. 3, the first sub-radiator 11 includes a free end 111 and a first coupling end 112. In other embodiments, the free end 111 and the first coupling end 112 are two opposite ends of the first sub-radiator 11 in a straight strip shape. In other embodiments, the first sub-radiator 11 is bent, the free end 111 and the first coupling end 112 may not be opposite in a linear direction, but the free end 111 and the first coupling end 112 are two ends of the first sub-radiator 11. The first sub-radiator 11 further has a grounding point A and a feeding point B disposed between the free end 111 and the first coupling end 112. The grounding point A is used for grounding GND1, and the feeding point B is located between the grounding point A and the first coupling end 112. The specific position of the grounding point A and the feeding point B on the first sub-radiator 11 is not limited.

Referring to FIG. 3, the second sub-radiator 12 includes a second coupling end 121 and a grounding end 122. The second coupling end 121 and the grounding end 122 are two opposite ends of the second sub-radiator 12 in the shape of a straight strip. The first sub-radiator 11 and the second sub-radiator 12 can be arranged along a straight line or approximately along a straight line (that is, there is a small tolerance in the design process). In other embodiments, the first sub-radiator 11 and the second sub-radiator 12 may also be staggered in the extending direction to form an avoidance space.

Referring to FIG. 3, the first coupling end 112 and the second coupling end 121 are opposite to each other and disposed at an interval, and the coupling gap 13 exists between the first coupling end 112 and the second coupling end 121. The coupling gap 13 is a broken slot between the first coupling end 112 of the first sub-radiator 11 and the second coupling end 121 of the second sub-radiator 12. For example, the width of the coupling gap 13 ranges from 0.5 mm to 2 mm, but is not limited to this size. The first sub-radiator 11 and the second sub-radiator 12 can generate capacitive coupling through the coupling gap 13. In one of the viewing angles, the first sub-radiator 11 and the second sub-radiator 12 can be seen as two parts of the radiator 10 separated by the coupling gap 13.

The first sub-radiator 11 and the second sub-radiator 12 are capacitively coupled through the coupling gap 13. "Capacitive coupling" means, an electric field is generated between the first sub-radiator 11 and the second sub-radiator 12, the signal of the first sub-radiator 11 can be transmitted to the second sub-radiator 12 through the electric field, and the signal of the second sub-radiator 12 can be transmitted to the first sub-radiator 11 through the electric field, so that the first sub-radiator 11 and the second sub-radiator 12 can be electrically connected even in a disconnected state. In this embodiment, the first sub-radiator 11 can generate the electric field under the excitation of the signal source 20, and the energy of the electric field can be transmitted to the second sub-radiator 12 through the coupling gap 13, so that the second sub-radiator 12 generates an excitation current.

The grounding end 122 of the second sub-radiator 12 is used to ground GND2.

Referring to FIG. 3, one end of the first matching circuit M1 is electrically connected to the feeding point B, and the signal source 20 is electrically connected to the other end of the first matching circuit M1. The signal source 20 is a radio frequency transceiver chip for transmitting a radio frequency signal, or is electrically connected to a feed portion of the radio frequency transceiver chip for transmitting a radio frequency signal. The first matching circuit M1 can include an adjustable element, such as, multiple selective branches formed by switch - capacitor - inductor - resistor, etc., a variable capacitor, or the like.

Referring to FIG. 4, the radiator 10 is excited by the signal source 20 to generate a plurality of resonance modes (such as a, b, c in FIG. 4). The resonance mode is characterized in that the antenna assembly 100 has high electromagnetic wave transmitting and receiving efficiency at and near the resonance frequency. In the present disclosure, under the excitation of the signal source 20, the radiator 10 has high electromagnetic wave receiving and transmitting efficiency at and near multiple resonance frequencies, so as to support the receiving and transmitting of electromagnetic wave signals in multiple frequency bands. In this embodiment, taking the absolute value of the return wave loss curve greater than or equal to 5 dB as the reference value for high electromagnetic wave receiving and transmitting efficiency.

The multiple frequency bands supported by the radiator 10 are continuous or discontinuous, the multiple frequency bands being continuous means that two adjacent frequency bands supported by the radiator 10 are at least partially overlapped, and the multiple frequency bands being discontinuous means that two adjacent frequency bands supported by the radiator 10 are not overlapped.

Referring to FIG. 4, in this embodiment, at least some of the plurality of frequency bands supported by the radiator 10 (for example, two resonance modes among the three resonance modes, three resonance modes, or all resonance modes) are continuous and form a wide bandwidth H. The bandwidth H covered by the plurality of resonance modes is greater than or equal to 1G. The radiator 10 is excited by the signal source 20 to generate the multiple resonance modes at the same time, the above multiple resonance modes form a continuous and wide bandwidth H, so as to improve the data throughput and data transmission rate when the antenna assembly 100 is applied to the electronic device 1000, thereby improving the communication quality of the electronic device 1000. In addition, when the bandwidth of the antenna assembly 100 is relatively wide, an adjustable element is not required to switch different frequency bands, so that the adjustable element can be omitted, the cost is saved, and the structure of the antenna assembly 100 is simple.

In the antenna assembly 100 and the electronic device 1000 provided by the present disclosure, the grounding point A of the first sub-radiator 11 is located between the two ends of the first sub-radiator 11, and the second sub-radiator 12 is capacitively coupled to the first sub-radiator 11, so that the currents of the first sub-radiator 11 and the second sub-radiator 12 are distributed in a plurality of ways to generate multiple resonance modes. The bandwidth covered by the multiple resonance modes is greater than or equal to 1 G, so that the antenna assembly 100 can support a wider bandwidth, the throughput and the data transmission rate of the antenna assembly 100 applied to the electronic device 1000 are improved, and the communication quality of the electronic device 1000 is improved.

The shapes and structures of the first sub-radiator 11 and the second sub-radiator 12 are not specifically limited. The shapes of the first sub-radiator 11 and the second sub-radiator 12 include, but are not limited to, a strip shape, a sheet shape, a rod shape, a coating, a film, etc. When the first sub-radiator 11 and the second sub-radiator 12 are in a strip shape, the extending tracks of the first sub-radiator 11 and the second sub-radiator 12 are not limited, thus the first sub-radiator 11 and the second sub-radiator 12 can be straight lines, curved lines, multi-section bending, or the like. The extending tracks of the radiator 10 can be lines with uniform width, or can be strips with gradually changed widths, widened areas, different widths, or the like.

Regarding the grounding of the radiator 10 of the antenna assembly 100, in some embodiments, the antenna assembly 100 itself has a reference ground, and the specific form of the reference ground includes but is not limited to a metal plate, or a metal layer formed in the flexible circuit board. The grounding point A of the first sub-radiator 11 is electrically connected to the reference ground through a conductive member, such as a grounding elastic sheet, a soldering tin, or a conductive adhesive. When the antenna assembly 100 is disposed in the electronic device 1000, the reference ground of the antenna assembly 100 is electrically connected to the reference ground of the electronic device 1000. In some embodiments, the antenna assembly 100 itself does not have a reference ground, the radiator 10 of the antenna assembly 100 is electrically connected to a reference ground of the electronic device 1000 or a reference ground of an electronic element in the electronic device 1000 through a direct electrical connection or through an intermediate conductive connector. In present disclosure, when the antenna assembly 100 is arranged in the electronic device 1000, the metal alloy of the display screen 200 and the middle plate 410 of the electronic device 1000 is used as the reference ground. The grounding point and the grounding end of the antenna assembly 100 are electrically connected with the reference ground of the electronic device 1000 through the conductive member, such as the grounding elastic sheet, the soldering tin, or the conductive adhesive, etc.

In general technology, the effective efficiency bandwidth of an antenna is not wide enough, such as in the coverage of the medium to high frequency range (1000 MHz to 3000 MHz). For example, in the case of 1710 MHz to 2690 MHz (B3/N3+B1/N1+B7/N7), at least two resonance modes are used to cover, and the bandwidth of these resonance modes is small and spaced apart from each other, it is difficult to cover simultaneously B3/N3+B1/N1, cover simultaneously B1/N1+B7/N7, and cover simultaneously B3/N3+B1/N1+B7/N7, resulting in poor signal coverage or insufficient miniaturization of the antenna in certain frequency bands. The above frequency bands are only examples and cannot be used as a limitation on the frequency bands that can be radiated in the present disclosure.

In the antenna assembly 100 provided by the present disclosure, by designing the construction and grounding points of the first sub-radiator 11 and the second sub-radiator 12, the currents of the first sub-radiator 11 and the second sub-radiator 12 are distributed in a plurality of ways, thus the antenna assembly 100 has a simple structure and generates a plurality of resonance modes. The bandwidth of the frequency band supported by multiple resonance modes is greater than or equal to 1 G, so that the antenna assembly 100 can support a wider bandwidth, further, the throughput and the data transmission rate when the antenna assembly 100 is applied to the electronic device 1000 are improved. When the antenna assembly 100 is applied to the above mentioned mid-to-high frequency bands (e.g., 1710 MHz-2690 MHz), B3/N3+B1/N1+B7/N7 can be supported at the same time, so that the antenna assembly 100 has at least a simple structure, miniaturization, and higher efficiency and data transmission rate in the application frequency band of B3/N3+B1/N1+B7/N7. B3/N3 includes any one or both of B3 and N3. The definition of B1/N1 and B7/N7 is similar to that of B3/N3, which will not be repeated herein. Certainly, the antenna assembly 100 provided in the present disclosure may also be applied to 1000 MHz-2000 MHz, 3000 MHz-6000 MHz, etc.

Referring to FIG. 4, the radiator 10 generates at least three resonance modes under excitation by the signal source 20. In other words, under the excitation of the signal source 20, the radiator 10 has a high receiving and transmitting efficiency at least at three frequencies. The at least three resonance modes include, but are not limited to, a first resonance mode a, a second resonance mode b, and a third resonance mode c. The first resonance mode a, the second resonance mode b, and the third resonance mode c are all generated at the same time. The resonance frequency of the first resonance mode a, the resonance frequency of the second resonance mode b, and the resonance frequency of the third resonance mode c are the first frequency f1, the second frequency f2, and the third frequency f3, respectively. For further description, the size relationship of the first frequency f1, second frequency f2, and third frequency f3 is that the first frequency f1, second frequency f2, and third frequency f3 increase sequentially. The first frequency f1, second frequency f2, and third frequency f3 are close to each other, so that the return loss values of the first resonance mode a, the return loss values of the second resonance mode b, and the return loss values of the third resonance mode c are continuous below -5 dB (-5 dB is only an example value, not limited to this value). The continuous frequency bands form a wider bandwidth, thereby simultaneously supporting multiple different frequency bands planned by multiple operators, such as B1, B3, B7, N1, N3, N7, and so on, which is beneficial to meet the indexes of different operators.

Referring to FIG. 4, the first resonance mode a can support B3/N3, the second resonance mode b can support B1/N1, and the third resonance mode c can support B7/N7. It can be seen from FIG. 4 that the frequency band A1 supported by the first resonance mode a, the frequency band B1 supported by the second resonance mode b and the frequency band C1 supported by the third resonance mode c are continuous and can cover a bandwidth greater than or equal to 1 G. In other words, the antenna assembly 100 can support B3/N3+B 1/N1+B7/N7 at the same time.

In some possible embodiments, referring to FIG. 3 and FIG. 4, the first sub-radiator 11 generates at least two of the first resonance mode a, the second resonance mode b and the third resonance mode c under the excitation of the signal source 20. The second sub-radiator 12 generates at least one of the first resonance mode a, the second resonance mode b and the third resonance mode c under the excitation of the signal source 20.

Since the resonance frequencies of the first resonance mode a, the second resonance mode b, and the third resonance mode c are sequentially increased, therefore, the effective electrical length of the radiator 10 supporting the first resonance mode a, the effective electrical length of the radiator 10 supporting the second resonance mode b, and the effective electrical length of the radiator 10 supporting the third resonance mode c are sequentially reduced. Since the middle portion of the first sub-radiator 11 is grounded and electrically connected to the signal source 20, in other words, the grounding point A and the feeding point B can segment the first sub-radiator 11, so that the first sub-radiator 11 can form multiple radiating segments with different effective electrical lengths. For example, one radiating segment can be formed between the free end 111 and the first coupling end 112, and another radiating segment can be formed between the grounding point A and the first coupling end 112, these radiating segments can make the first sub-radiator 11 produce multiple resonance modes.

For example, the first sub-radiator 11 is configured to generate the first resonance mode a under excitation of the signal source 20, the first sub-radiator 11 and the second sub-radiator 12 are configured to generate the second resonance mode b under excitation of the signal source 20, and the first sub-radiator 11 and the second sub-radiator 12 between the grounding point A and the first coupling end 112 are configured to generate the third resonance mode c under the excitation of the signal source 20. The frequency of the third resonance mode c is relatively high, and the required electrical length of the radiator 10 is relatively short. The second sub-radiator 12 assists in generating the third resonance mode c, so that the length of the second sub-radiator 12 is relatively short, the whole length of the radiator 10 is relatively small, the superposition size of the antenna assembly 100 is reduced, and the miniaturization of the antenna assembly 100 is promoted.

Referring to FIG. 4, the frequency band supported by the first resonance mode a is a first frequency band T1, the frequency band supported by the second resonance mode b is a second frequency band T2, and the frequency band supported by the third resonance mode c is a third frequency band T3. The first frequency band T1,the second frequency band T2 and the third frequency band T3 are aggregated to form a target application frequency band T4. The bandwidth H of the target application frequency band T4 is larger than or equal to 1.4 G, and the relative bandwidth is greater than or equal to 50%. In some embodiments, the first frequency band T1 supported by the first resonance mode a, the second frequency band T2 supported by the second resonance mode b, the third frequency band T3 supported by the third resonance mode c are the frequency band corresponding to a return loss of below -5 dB. The first frequency band T1, the second frequency band T2 and the third frequency band T3 are continuous (the part that overlap with each other are continuous) and aggregated to form the target application frequency band T4. The difference between the maximum frequency and the minimum frequency of the target application frequency band T4 is greater than or equal to 1.4 G. By adjusting the effective electrical length and the feed position of the radiator 10, the width of the target application frequency band T4 can be adjusted to 1.8 G, 2 G, 2.5 G, 3G, etc.

From the perspective of the current side, the antenna assembly 100 generates at least three current distributions under excitation of the signal source 20, including a first current distribution R1, a second current distribution R2 and a third current distribution R3, respectively.

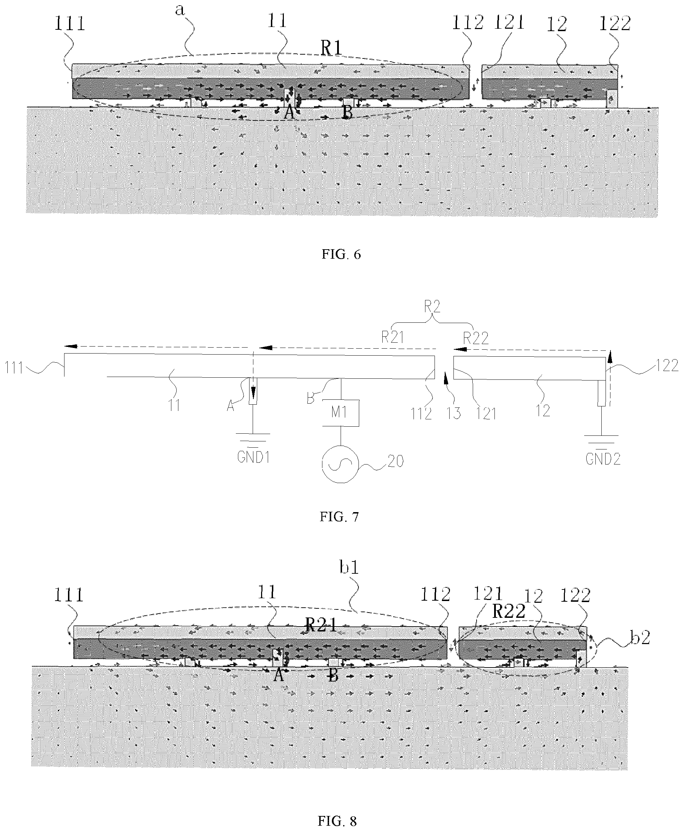

Referring to FIGS. 5 and 6, the current distribution corresponding to the first resonance mode a includes, but is not limited to, a first current distribution R1: from the first coupling end 112 to the grounding point A and from the free end 111 to the grounding point A. A part of the current flows from the first coupling 112 to the grounding point A, the other part of the current flows from the free end 111 to the grounding point A, wherein the flow directions of the two parts of the current are opposite. Under the first resonance mode a, a small amount of current is also generated under the coupling action of the second sub-radiator 12 and the first sub-radiator 11, and the flow direction of the current is from the grounding end 122 to the second coupling end 121. The current distribution above generates the first resonance mode a.

Referring to FIGS. 7 and 8, the current distribution corresponding to the second resonance mode b includes, but is not limited to, a second current distribution R2: from the grounding end 122 to the grounding point A and to the free end 111. The current of the first sub-radiator 11 flows from the first coupling end 112 to the free end 111, the second sub-radiator 12 generates a current under the coupling action of the first sub-radiator 11, and the current flows from the grounding end 122 to the second coupling end 121. In other words, the current of the first sub-radiator 11 and the current of the second sub-radiator 12 flow in the same direction.

Referring to FIGS. 7 and 8, the second current distribution R2 includes a first sub-current distribution R21 and a second sub-current distribution R22, wherein the first sub-current distribution R21 is a current distribution on the first sub-radiator 11 to generate a first sub-resonance mode b1. The second sub-current distribution R22 is a current distribution on the second sub-radiator 12 to generate a second sub-resonance mode b2. The first sub-resonance mode b1 and the second sub-resonance mode b2 together form the second resonance mode b. In other words, the second resonance mode b includes the first sub-resonance mode b1 and the second sub-resonance mode b2. The first sub-resonance mode b1 is generated by the first sub-radiator 11 under the excitation of the signal source 20. The second sub-resonance mode b2 is generated by the second sub-radiator 12 under the capacitive coupling effect of the first sub-radiator 11. In some embodiments, the first sub-resonance mode b1 is a dipole mode, the second sub-resonance mode b2 is a parasitic radiation mode generated by the second sub-radiator 12. Since the current flow of the first sub-radiator 11 is the same as that of the second sub-radiator 12, the parasitic radiation mode and the dipole mode can be mutually enhanced to produce stronger radiation efficiency. In other words, because the second resonance mode b actually has the aggregation of two sub-resonance modes, and the resonance frequencies of these two resonance modes are close to each other, a resonance mode is formed to enhance the radiation efficiency and bandwidth.

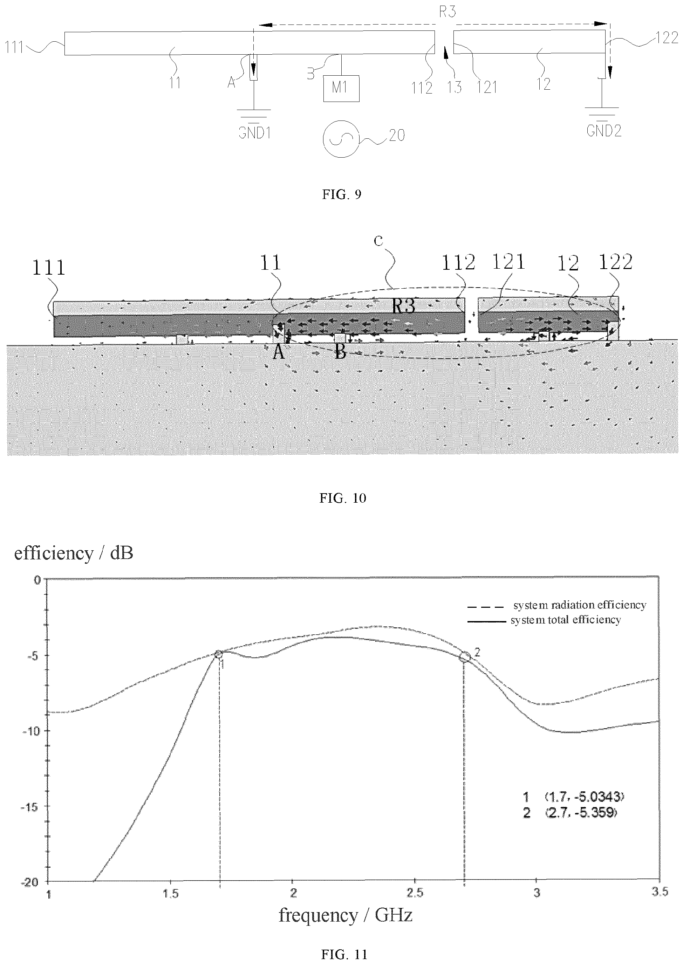

Referring to FIGS. 9 and 10, the current distribution corresponding to the third resonance mode c includes, but is not limited to, the third current distribution R3: from the first coupling end 112 to the grounding point A and from the second coupling end 121 to the grounding end 122. The current of the first coupling end 112 flows to the grounding point A and returns to the ground. The current of the second coupling end 121 flows to the grounding end 122 and returns to the ground. In other words, the current of the first sub-radiator 11 and the current of the second sub-radiator 12 flow opposite to each other. The third resonance mode c is jointly generated between the first coupling end 112 of the first sub-radiator 11 and the grounding point A, and the second coupling end 121 of the second sub-radiator 12 and the grounding end 122 under the action of the signal source 20.

From the current distribution of the first resonance mode a, the second resonance mode b and the third resonance mode c, the currents corresponding to the first resonance mode a, the second resonance mode b and the third resonance mode c have partial same flow direction, for example, the flow direction from the first coupling end 112 to the grounding point A, so that the three resonance modes can be mutually enhanced.

In the present disclosure, referring to FIG. 4, the target application frequency band T4 formed by aggregating the first frequency band T1, the second frequency band T2 and the third frequency band T3 includes, but is not limited to, 1.6 GHz to 3 GHz, 2 GHz to 3. 4 GHz, 2.6 GHz to 4 GHz, 3.6 GHz to 5 GHz, etc. Of course, when the bandwidth of the target application frequency band T4 is 2G, 3G, etc., the target application frequency band T4 formed by aggregating the first frequency band T1, the second frequency band T2 and the third frequency band T3 includes, but is not limited to, 1 GHz to 3 GHz, 2 GHz to 4 GHz, 3 GHz to 6 GHz, etc., which are not exemplified here one by one. In this embodiment, the target application frequency band T4 formed by aggregating the first frequency band T1, the second frequency band T2 and the third frequency band T3 covers 1.6 GHz to 3 GHz.

In some embodiments, the target application frequency band T4 can support any one or both of the LTE 4G frequency band and the NR 5G frequency band. When the target application frequency band T4 formed by aggregating the first frequency band T1,the second frequency band T2 and the third frequency band T3 covers 1.6 GHz to 3 GHz, the support frequency bands of the antenna assembly 100 for the LTE 4G frequency band include, but are not limited to, at least one of B1, B2, B3, B4, B7, B32, B38, B39, B40, B41, B48, and B66; and the support frequency bands of the antenna assembly 100 for the NR 5G frequency band include, but are not limited to, at least one of N1, N2, N3, N4, N7, N32, N38, N39, N40, N41, N48, and N66. The antenna assembly 100 provided by the present disclosure can cover any combination of the above NR 5G frequency band and the LTE 4G frequency band. Of course, the antenna assembly 100 may be loaded with 4G LTE signals alone, or loaded with 5G NR signals alone, or may also be loaded with 4G LTE signals and 5G NR signals simultaneously, that is, the LTE NR Double Connect (EN-DC) of a 4G wireless access network and 5G-NR is implemented.

The frequency band received and transmitted by the antenna assembly 100 includes a plurality of carriers (carriers are radio waves of a specific frequency) aggregated, that is, Carrier Aggregation (CA) is implemented to increase the transmission bandwidth, improve the throughput and increase the signal transmission rate.

The above-listed frequency bands may be mid-to-high frequency bands to which multiple operators may apply. The antenna assembly 100 provided in the present disclosure may simultaneously support any one of the above-mentioned frequency bands or a combination of multiple frequency bands. Therefore, the antenna assembly 100 provided by the present disclosure can support electronic device 1000 models corresponding to a plurality of different operators, different antenna structures do not need to be adopted for different operators, and the application range and the compatibility of the antenna assembly 100 are further improved.

From the perspective of the structure of the antenna assembly 100, referring to FIGS. 5, 7 and 9, the grounding point A of the first sub-radiator 11 is located between the free end 111 and the first coupling end 112, so that the first sub-radiator 11 and the signal source 20 form a T-shaped antenna. The T-shaped antenna is capable of forming the first current distribution R1, the first sub-current distribution R21, so that the first sub-radiator 11 generates a plurality of resonance modes in a middle-to-high frequency band (not limited to the middle-to-high frequency band). For example, the first resonance mode a and the first sub-resonance mode b1 are provided, and the resonance frequencies of the first resonance mode a and the first sub-resonance mode b1 are close to each other, so that a wider bandwidth is formed. The second sub-radiator 12 is coupled to the first sub-radiator 11 to generate the second sub-current distribution R22 on the second sub-radiator 12, so that the first sub-current distribution R21 and the second sub-current distribution R22 jointly generate the second resonance mode b. The first sub-radiator 11 and the second sub-radiator 12 also generate the third current distribution R3, so that the third resonance mode c is generated. By setting the length of the first sub-radiator 11 and the second sub-radiator 12, the resonance frequencies of the first resonance mode a, the second resonance mode b and the third resonance mode c similar to each other to form a wider bandwidth.

In some embodiments, the wavelength corresponding to the resonance frequency of the first resonance mode a is the first wavelength. The length of the radiator 10 between the first free end 111 and the first coupling end 112 is (1/4) to (3/4) times that of the first wavelength. In the case where no other matching circuit is set except for the first matching circuit M1, the length of the radiator 10 between the free end 111 and the first coupling end 112 is 1/2 times that of the first wavelength, creating conditions for subsequent antenna assembly 100 to generate higher signal transmission efficiency at the first frequency f1 and the second frequency f2. In a case where a matching circuit is provided in addition to the first matching circuit M1, the accessed matching circuit can adjust the effective electrical length of the first sub-radiator 11, for example, a capacitive matching circuit is accessed, the length of the radiator 10 between the free end 111 and the first coupling end 112 can be reduced, and by accessing an inductive matching circuit, the length of the radiator 10 between the free end 111 and the first coupling end 112 can be increased, so that the length of the radiator 10 between the free end 111 and the first coupling end 112 can be adjusted to be (1/4) to (3/4) times that of the first wavelength. Certainly, in practical application, the length of the radiator 10 between the free end 111 and the first coupling end 112 can be adjusted to be (1/5) times, (4/5) times, etc. of the first wavelength.

For example, when the target application frequency covers B3/N3+B1/N1+B7/N7, the range of the first frequency f1 includes, but is not limited to, 1.71 GHz to1. 88 GHz. In this embodiment, taking the first frequency f1 being 1.72 GHz as an example, the length range of the first sub-radiator 11 can be determined. Of course, the first frequency f1 can vary with the variation of the frequency band covered by the target application frequency.

In the present disclosure, the specific position of the grounding point A is not limited. In some embodiments, the length of the radiator 10 between the grounding point A and the free end 111 is (1/8) to (3/4) times that of the first sub-radiator 11. In other words, the position of the grounding point A may be within a range of (1/8) to (3/4) from the free end 111 of the first sub-radiator 11. Through the above design or in combination with the design of the matching circuit on the first sub-radiator 11 (described in detail later), the first sub-radiator 11 can form the current distributions such as the first current distribution R1 and the first sub-current distribution R21, thereby generating the first resonance mode a, the first sub-resonance mode b1 and assisting in generating the third resonance mode c, thereby generating a wider bandwidth and improving throughput and quantity transmission rate. In addition, the grounding point A has a larger setting position range, so that the optional range of the position of the set grounding connecting element is larger. When the antenna assembly 100 is arranged on the electronic device 1000, the optional range of the position of the grounding connecting element is larger, so that the optional range of the position of the antenna assembly 100 is larger, which is more beneficial to the installation of the antenna assembly 100 on the electronic device 1000.

Of course, 1/8 and 3/4 are only examples and are not limited thereto. In other embodiments, the length of the radiator 10 between the grounding point A and the free end 111 may be slightly smaller than 1/8 of the length of the first sub-radiator 11, or slightly larger than 3/4 of the length of the first sub-radiator 11.

In some embodiments, the length of the radiator 10 between the grounding point A and the free end 111 may be (1/4) to (3/4) times that of the first sub-radiator 11. The position of the grounding point A can be in the range of (1/4) to (3/4) from the free end 111 of the first sub-radiator 11, so that the position of the grounding point A is closer to the middle part of the first sub-radiator 11, which is beneficial to increase the bandwidth and efficiency of the antenna assembly 100.

In some embodiments, the length of the radiator 10 between the grounding point A and the free end 111 is (3/8) to (5/8) times that of the first sub-radiator 11, in other words, the position of the grounding point A can be in the range of (3/8) to (5/8) from the free end 111 of the first sub-radiator 11, so that the position of the grounding point A is closer to the middle part of the first sub-radiator 11, which is beneficial for increasing the bandwidth and efficiency of the antenna assembly 100.

For example, the grounding point A may be close to the middle part of the first sub-radiator 11. Further, the length between the grounding point A and the free end 111 may be slightly greater than the length between the grounding point A and the first coupling end 121. For example, the length between the grounding point A and the free end 111 is about 18 mm, and the length between the grounding point A and the first coupling end 121 is about 16 mm.

Taking the length of the radiator 10 between the free end 111 and the first coupling end 112 being (1/2) times that of the first wavelength as an example, the length of the radiator 10 between the grounding point A and the free end 111 is 1/2 times the length of the first sub-radiator 11, at this time, the length of the radiator 10 between the grounding point A and the free end 111 is (1/4) times that of the first wavelength.

Further, by providing a capacitive matching circuit between the grounding point A and the free end 111, the length of the first sub-radiator 11 between the grounding point A and the free end 111 can be reduced, thus the length of the radiator 10 between the grounding point A and the free end 111 is 1/4 times the length of the first sub-radiator 11. In practical applications, of course not limited thereto, it may also be 1/5, 2/5, etc. By providing a grounded capacitive matching circuit between the grounding point A and the first coupling end 112, the length of the first sub-radiator 11 between the grounding point A and the first coupling end 112 can be reduced, so that the length of the radiator 10 between the grounding point A and the free end 111 is 3/4 times the length of the first sub-radiator 11. In practical application, it may also be 3/5, 4/5, etc. Correspondingly, the length of the radiator 10 between the grounding point A and the free end 111 is (1/8) to (3/8) times that of the first wavelength.

The wavelength corresponding to the resonance frequency of the third resonance mode c is the second wavelength. The length of the radiator 10 between the second coupling end 121 and the grounding end 122 is (1/8) to (3/8) times that of the second wavelength. In other words, the length of the second sub-radiator 12 is (1/8) to (3/8) times that of the wavelength corresponding to the third frequency f3. When no matching circuit is provided on the second sub-radiator 12, the length of the second sub-radiator 12 is (1/4) times that of the wavelength corresponding to the third frequency f3, so that the second sub-radiator 12 generates higher receiving and transmitting efficiency at the third frequency f3, thus a resonance is generated at the third frequency f3 to form the third resonance mode c. When a capacitive matching circuit is provided on the second sub-radiator 12, the length of the second sub-radiator 12 may be 1/8 times that of the wavelength corresponding to the third frequency f3. When an inductive matching circuit is provided on the second sub-radiator 12, the length of the second sub-radiator 12 may be 3/8 times that of the wavelength corresponding to the third frequency f3.

For example, when the target application frequency covers B3/N3+B1/N1+B7/N7, the range of the third frequency f3 includes but is not limited to, 2.5 GHz to 3 GHz. In this embodiment, taking the third frequency f3 being 2.76 GHz as an example, the length range of the second sub-radiator 12 can be determined. Of course, the third frequency f3 can vary with the variation of the frequency band covered by the target application frequency.

Further, by adjusting the length of the first sub-radiator 11, the length of the second sub-radiator 12, the position of the feeding point B and the position of the grounding point A, the position of the second frequency f2 can be adjusted, so that the first frequency f1, the second frequency f2 and the third frequency f3 are close to each other and can support a wider bandwidth.

In summary, the present disclosure designs the structure of the antenna assembly 100, so that the radiator 10 of the antenna assembly 100 includes the first sub-radiator 11 and the second sub-radiator 12, the grounding point A of the first sub-radiator 11 is positioned between the two ends of the first sub-radiator 11, the second sub-radiator 12 is the parasitic radiator of the first sub-radiator 11, and the first sub-radiator 11 is similar to the radiator of a T-shaped antenna. Thus, the first sub-radiator 11 generates at least two resonance modes. The second sub-radiator 12 is capable of strengthening the resonance mode of the second sub-radiator 12. Thus, the first sub-radiator 11 can generate the first resonance mode a, the first sub-radiator 11 and the second sub-radiator 12 can jointly generate the second resonance mode b. By the length of the first sub-radiator 11 and the position of grounding point A are designed and optimized, the resonance frequency of the first resonance mode a and the resonance frequency of the second resonance mode b are close to each other to form a larger bandwidth, and cover the frequency band that needs to be covered. A part of the first sub-radiator 11 and a part of the second sub-radiator 12 form an antenna structure with two ends returned to the ground. Thus, the first sub-radiator 11 and the second sub-radiator 12 generate the third resonance mode c. By designing and optimizing the length of the second sub-radiator 12, the resonance frequency of the third resonance mode c is close to that of the third resonance mode c, and the resonance frequencies of the first resonance mode a, the second resonance mode b and the third resonance mode c are continuous and form a bandwidth greater than or equal to 1G, so as to improve the throughput of the antenna assembly 100 and the network access rate of the electronic device 1000.

Referring to FIG. 11, FIG. 11 shows an efficiency of the antenna assembly 100 provided by the present disclosure in an extreme full screen environment. In FIG. 11, the dotted line is a radiation efficiency curve of the antenna assembly 100, and the solid line is a matching total efficiency curve of the antenna assembly 100. In the present disclosure, the metal alloy of the display screen 200 and the middle frame 420 is used as the reference ground GND. The distance between the radiator 10 of the antenna assembly 100 and the reference ground GND is less than or equal to 0.5 mm, in other words, the clearance area of the antenna assembly 100 is 0.5 mm, which fully meets the environmental requirements of the current electronic device 1000 such as a mobile phone. As shown in FIG. 11, even in a very small clearance area, the efficiency of the antenna assembly 100 is kept high in a range from 1.7 GHz to 2. 7 GHz. For example, the efficiency of the antenna assembly 100 in a range from 1.7 GHz to 2. 7 GHz is greater than or equal to -5 dB.

As can be seen from the foregoing, the antenna assembly 100 provided by the present disclosure still has higher radiation efficiency in a very small clearance area, so that the antenna assembly 100 has a smaller clearance area when applied to the electronic device 1000. Compared with other antennas that require a larger clearance area to have higher efficiency, the overall volume of the electronic device 1000 can be reduced.

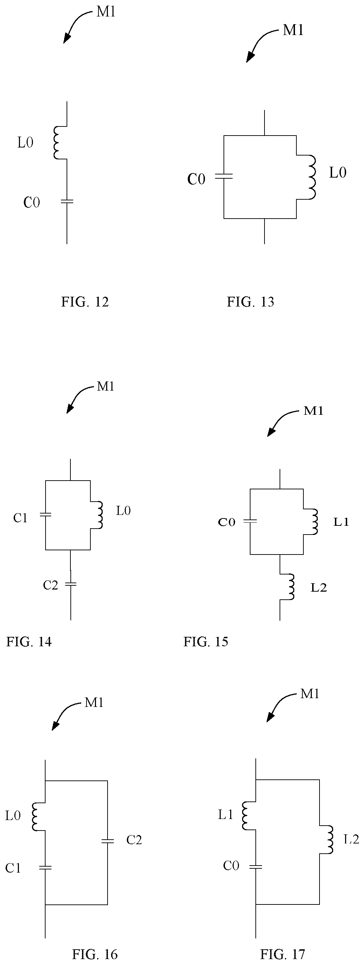

Referring to FIGS. 12 to 19, FIG. 12 to 19 are schematic views of the first matching circuit M1 provided in various embodiments. The specific structure of the first matching circuit is not limited in the present disclosure. The first matching circuit M1 includes one or more of the following frequency-selective filter circuits.

Referring to FIG. 12, the first matching circuit M1 includes a band-pass circuit formed by connecting an inductor L0 and a capacitor C0 in series.

Referring to FIG. 13, the first matching circuit M1 includes a band-stop circuit formed by parallel connection of the inductor L0 and the capacitor C0.

Referring to FIG. 14, the first matching circuit M1 includes a band-pass or band-stop circuit formed by the inductor L0, the first capacitor C1, and the second capacitor C2. The inductor L0 is connected in parallel with the first capacitor C1, and the second capacitor C2 is electrically connected to a node where the inductor L0 and the first capacitor C1 are electrically connected.

Referring to FIG. 15, the first matching circuit M1 includes a band-pass or band-stop circuit formed by the capacitor C0, the first inductor L1, and the second inductor L2. The capacitor C0 is connected in parallel with the first inductor L1, and the second inductor L2 is electrically connected to a node where the capacitor C0 and the first inductor L1 are electrically connected.

Referring to FIG. 16, the first matching circuit M1 includes a band-pass or band-stop circuit formed by the inductor L0, the first capacitor C1, and the second capacitor C2. The inductor L0 is connected in series with the first capacitor C1. One end of the second capacitor C2 is electrically connected to the end of the inductor L0 that is not connected to the first capacitor C1, and the other end of the second capacitor C2 is electrically connected to the end of the first capacitor C1 that is not connected to the inductor L0.

Referring to FIG. 17, the first matching circuit M1 includes a band-pass or band-stop circuit formed by the capacitor C0, the first inductor L1, and the second inductor L2. The capacitor C0 is connected in series with the first inductor L1. One end of the second inductor L2 is electrically connected to the end of the capacitor C0 that is not connected to the first inductor L1. The other end of the second inductor L2 is electrically connected to the end of the first inductor L1 that is not connected to the capacitor C0.

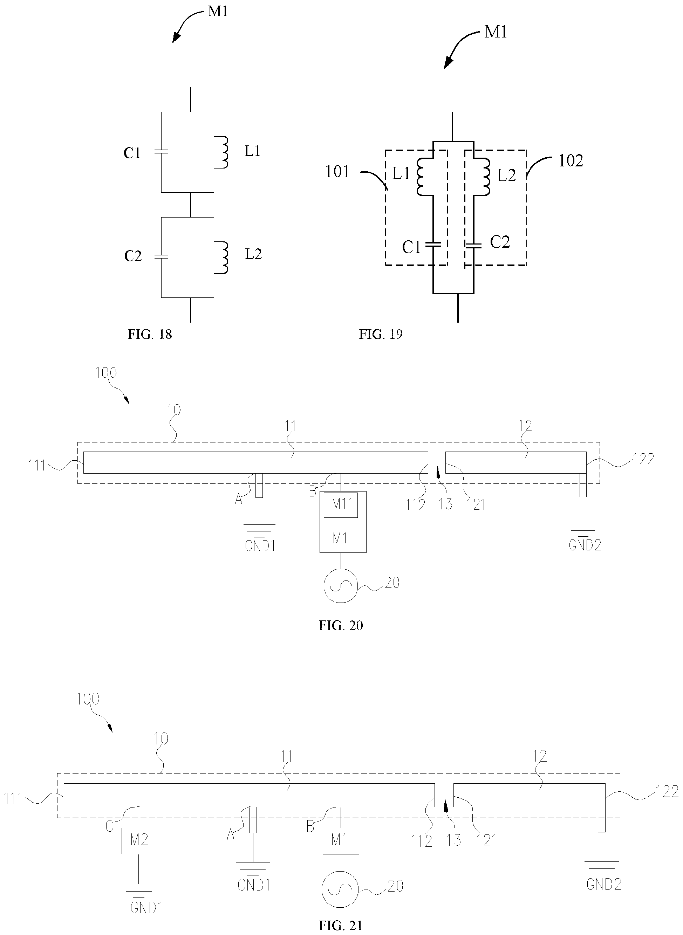

Referring to FIG. 18, the first matching circuit M1 includes the first capacitor C1, the second capacitor C2, the first inductor L1 and the second inductor L2. The first capacitor C1 and the first inductor L1 are connected in parallel, and the second capacitor C2 and the second inductor L2 are connected in parallel. One end of the whole formed by the parallel connection of the second capacitor C2 and the second inductor L2 is electrically connected with one end of the whole formed by the parallel connection of the first capacitor C1 and the first inductor L1.

Referring to FIG. 19, the first matching circuit M1 includes the first capacitor C1, the second capacitor C2, the first inductor L1, and the second inductor L2. The first capacitor C1 and the first inductor L1 are connected in series to form a first unit 101, the second capacitor C2 and the second inductor L2 are connected in series to form a second unit 102, and the first unit 101 and the second unit 102 are connected in parallel.

The above is an example of the specific structure of the antenna assembly 100. In some embodiments, the antenna assembly 100 is disposed in the electronic device 1000. The following is an example of an implementation method for disposing the antenna component 100 on electronic device 1000. For the electronic device 1000, at least a part of the antenna assembly 100 is integrated on the housing 200 or all of the antenna assembly 100 is disposed in the housing 200. The radiator 10 of the antenna assembly 100 is disposed on the housing 200 or in the housing 200.

The above is the basic structure of the antenna assembly 100, and the antenna assembly 100 is further optimized by the following embodiments to further reduce the stacking size of the antenna assembly 100.

In some embodiments, referring to FIG. 20, the first matching circuit M1 includes a first sub-circuit M11. The first sub-circuit M11 is electrically connected to the feeding point B. The first sub-circuit M11 is capacitive when operating in the fourth frequency band. The fourth frequency band is located in the frequency bands corresponding to the first resonance mode a, the second resonance mode b and the third resonance mode c. For example, the fourth frequency band may be a continuous frequency band formed by the first resonance mode a, the second resonance mode b and the third resonance mode c. The first sub-circuit M11 is capacitive when operating in the fourth frequency band, so that the resonance frequencies of the first resonance mode a, the second resonance mode b, and the third resonance mode c can moves toward the low frequency end. The first sub-circuit M11 is similar to "connecting an effective electrical length" on the first sub-radiator 11 between the grounding point A and the first coupling end 112, thus, the actual length of the first sub-radiator 11 between the grounding point A and the first coupling end 112 can be relatively reduced under the condition that the position of the required resonance frequency is not changed, thereby realizing the miniaturization of the first sub-radiator 11.

In some embodiments, the first sub-circuit M11 includes, but is not limited to, a capacitor, a series or parallel circuit including a capacitor, an inductor, a resistor, etc.

Referring to FIG. 21, the first sub-radiator 11 further has a first matching point C located between the free end 111 and the grounding point A. The antenna assembly 100 further includes a second matching circuit M2. One end of the second matching circuit M2 is electrically connected to the first matching point C, and the other end of the second matching circuit M2 is grounded. The second matching circuit M2 includes an adjustable element, such as, multiple selective branches formed by switch - capacitor - inductor - resistor, etc., a variable capacitor, or the like. The adjustable element is used to adjust the positions of three resonance modes. The change of mode position can also improve the performance of single frequency band, and better meet ENDC/CA combination of different frequency bands.

By adding the second matching circuit M2, the resonance frequencies of the first resonance mode a and the second resonance mode b can be adjusted by the second matching circuit M2. For example, when the second matching circuit M2 is capacitive, the resonance frequencies of the first resonance mode a and the second resonance mode b can move toward the low frequency end; when the second matching circuit M2 is inductive, the resonance frequencies of the first resonance mode a and the second resonance mode b can move toward the high frequency end. By the above adjustment, the first resonance mode a and the second resonance mode b can cover the actually required frequency band and generate resonance at the actually required frequency.

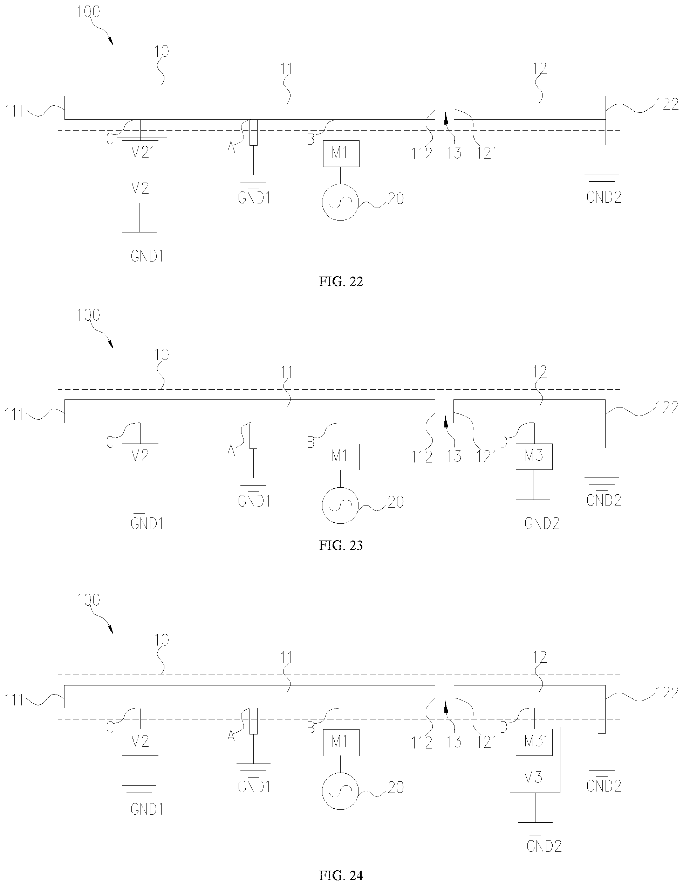

In some embodiments, referring to FIG. 22, the second matching circuit M2 includes a second sub-circuit M21. The second sub-circuit M21 is electrically connected to the first matching point C. The second sub-circuit M21 is capacitive when operating in the fifth frequency band. The fifth frequency band is located in the frequency bands corresponding to the first resonance mode a and the second resonance mode b. For example, the fifth frequency band may be a continuous frequency band formed by the first resonance mode a and the second resonance mode b. The second sub-circuit M21 is capacitive when operating in the fifth frequency band, the resonance frequencies of the first resonance mode a and the second resonance mode b can move toward the low frequency end. The second sub-circuit M21 is similar to "connecting an effective electrical length" on the first sub-radiator 11 between the free end 111 and the grounding point A. Therefore, the actual length of the first sub-radiator 11 between the free end 111 and the grounding point A can be relatively reduced under the condition that the position of the required resonance frequency is not changed. Thus, the miniaturization of the first sub-radiator 11 is realized. After the distance between the grounding point A and the free end 111 is reduced, the grounding point A can be connected to the 1/8 to 3/4 position of the first sub-radiator 11.

In some embodiments, the second sub-circuit M21 includes, but is not limited to, a capacitor, a series or parallel circuit including a capacitor, an inductor, a resistor, etc.

In some embodiments, referring to FIG. 23, the second sub-radiator 12 further has a second matching point D between the second coupling end 121 and the grounding end 122.

The antenna assembly 100 further includes a third matching circuit M3. One end of the third matching circuit M3 is electrically connected with the second matching point D, and the other end of the third matching circuit M3 is grounded. The third matching circuit M3 includes an adjustable element, such as, multiple selective branches formed by switch - capacitor - inductor - resistor, etc., a variable capacitor, or the like. The adjustable element is used for adjusting the positions of the three resonance modes. The change of mode position can also improve the performance of single frequency band, and can better meet ENDC/CA combination of different frequency bands.

By adding the third matching circuit M3, the resonance frequencies of the second resonance mode b and the third resonance mode c can be adjusted by the third matching circuit M3. For example, when the third matching circuit M3 is capacitive, the resonance frequencies of the second resonance mode b and the third resonance mode c can move towards the low frequency end; when the third matching circuit M3 is inductive, the resonance frequencies of the second resonance mode b and the third resonance mode c can move toward the high frequency end. By the above adjustment, the second resonance mode b and the third resonance mode c can cover the actually required frequency band and generate resonance at the actually required frequency.

Referring to FIG. 24, the third matching circuit M3 includes a third sub-circuit M31. The third sub-circuit M31 is electrically connected to the second matching point D. The third sub-circuit M31 is capacitive when operating in a sixth frequency band. The sixth frequency band is located in a frequency band corresponding to the second resonance mode b and the third resonance mode c. For example, the sixth frequency band may be a continuous frequency band formed by the second resonance mode b and the third resonance mode c. The third sub-circuit M31 is capacitive when operating in the sixth frequency band, so that the resonance frequencies of the second resonance mode b and the third resonance mode c can move toward the low frequency end. The third sub-circuit M31 is similar to "connecting an effective electrical length" on the second sub-radiator 12 between the second coupling end 121 and the grounding end 122, thus the actual length of the second sub-radiator 12 between the second coupling end 121 and the grounding end 122 can be relatively reduced under the condition that the position of the required resonance frequency is not changed. Thus, the miniaturization of the second sub radiator 12 is achieved.

In some embodiments, the third sub-circuit M31 includes, but is not limited to, a capacitor, a series or parallel circuit including a capacitor, an inductor, a resistor, etc.

When the antenna assembly 100 is actually designed, one or two of the first matching circuit M1, the second matching circuit M2 and the third matching circuit M3 can be selected to be arranged at corresponding positions. All of the first matching circuit M1, the second matching circuit M2 and the third matching circuit M3 can also be arranged at corresponding positions, so that the stacking size of the radiator 10 can be further reduced.

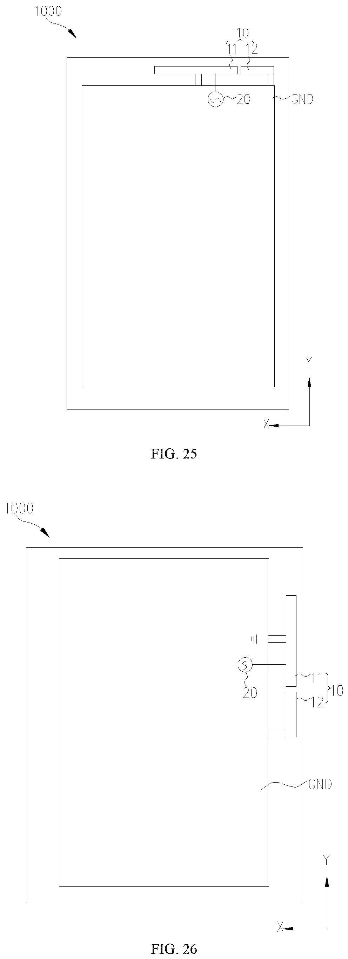

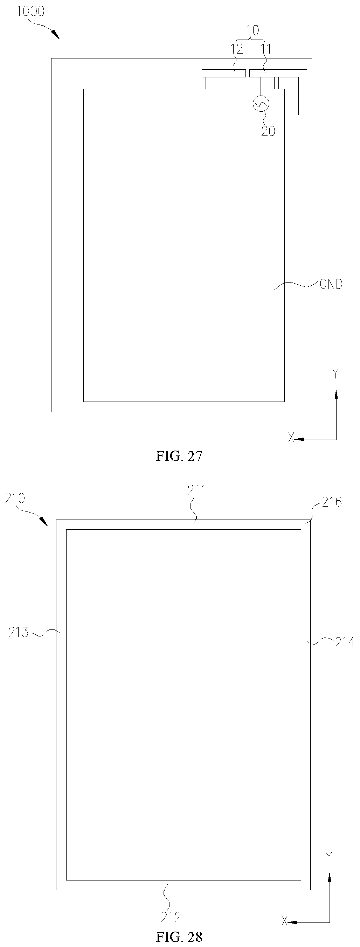

In the present disclosure, a specific location where the radiator 10 of the antenna assembly 100 is disposed on the electronic device 1000 is not specifically limited. For example, referring to FIGS. 25 and 26, the radiator 10 of the antenna assembly 100 may be entirely disposed on one side of the electronic device 1000. Referring to FIG. 27, the radiator 10 is located at the corner part of electronic device 1000. The following implementation methods are used as examples.

Referring to FIGS. 2 and 28, one side frame of the frame 210 is connected to the peripheral edge of the rear cover 220, and the other side frame of the frame 210 is connected to the peripheral edge of the display screen 300. The frame 210 includes multiple side frames connected end to end. Adjacent two side frames intersect, for example, adjacent two side frames are perpendicular to each other. The multiple side frames include a top side frame 212 and a bottom side frame 213 that are opposite to each other, and a first side frame 214 and a second side frame 215 that are connected with the top side frame 212 and the bottom side frame 213. The connection position between two adjacent side frames is the corner part 216. The top side frame 212 and the bottom side frame 213 are parallel and equal to each other. The first side frame 214 and the second side frame 215 are parallel and equal to each other. The length of the first side frame 214 is greater than that of the top side frame 212.

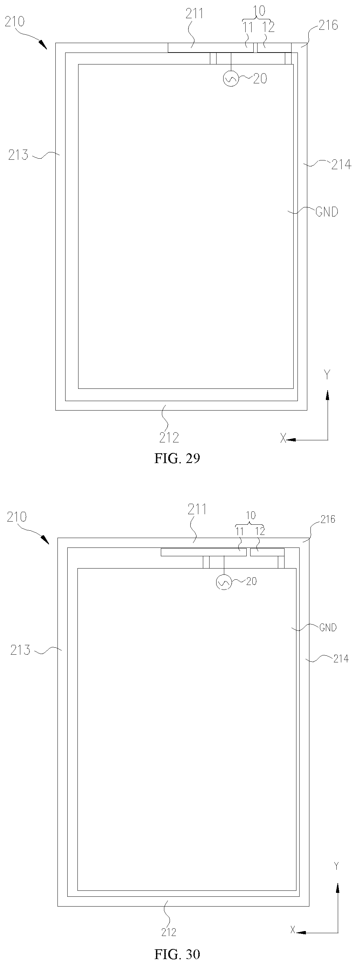

In some embodiments, referring to FIGS. 28 and 29, at least a part of the radiator 10 of the antenna module 100 is integrated with the frame 210. For example, the frame 210 is made of metal, and the first sub-radiator 11 and the second sub-radiator 12 are integrated with the frame 210. In other embodiments, the radiator 10 may also be integrated with the rear cover 220. In other words, the first sub-radiator 11 and the second sub-radiator 12 are integrated as a part of the housing 200. In some embodiments, the reference ground GND of the antenna assembly 100, the signal source 20, the first matching circuit M1, the second matching circuit M2, the third matching circuit M3, etc., are all disposed on the circuit board.

In some embodiments, referring to FIGS. 28 and 30, the first sub-radiator 11 and the second sub-radiator 12 are formed on the surface of the frame 210. The basic forms of the first sub-radiator 11 and the second sub-radiator 12 include, but are not limited to, patch radiators, which are formed on the inner surface of the frame 210 by laser direct structuring (LDS), print direct structuring (PDS) and other processes. In this embodiment, the frame 210 may be made of a non-conductive material, and the radiator 10 may also be disposed on the rear cover 220.

In some embodiments, the first sub-radiator 11 and the second sub-radiator 12 are disposed on a flexible circuit board. The flexible circuit board is attached to the surface of the frame 210. The first sub-radiator 11 and the second sub-radiator 12 may be integrated on the flexible circuit board. The flexible circuit board is stuck on the inner surface of the middle frame 420 through adhesive, etc. In the embodiment, the material of the frame 210 can be non-conductive material. Of course, the radiator 10 can also be arranged on the inner surface of the rear cover 220.

Referring to FIGS. 25 and 28, the top side frame 212 is an edge which is far away from the ground when an operator holds the electronic device 1000 and faces the front surface of the electronic device 1000 for use, the bottom side frame 213 is a side that faces the ground. In some embodiments, the radiator 10 is completely arranged on the top side frame 210, so that when the user uses the electronic device 1000 in a vertical screen, the radiator 10 faces the external space and shields less, and the efficiency of the antenna assembly 100 is high.

Referring to FIGS. 26 and 28, in some embodiments, the radiator 10 is completely disposed on the second side frame 215, so that when a user uses the electronic device 1000 in a horizontal screen, the radiator 10 faces the external space and shields less space, so that the efficiency of the antenna assembly 100 is higher, and certainly, the radiator 10 can also be completely disposed on the first side frame 214.

Referring to FIGS. 27 and 28, in some embodiments, the radiator 10 can be arranged at the corner part 216 of the electronic device 1000. The efficiency of the antenna assembly 100 arranged at the corner part 216 is better, the environment of the antenna assembly 100 in a complete machine is also better, and the complete machine is easier to stack. In some embodiments, one part of the radiator 10 is arranged on at least one side frame, and the other part is arranged at the corner part 216. In some embodiments, the second sub-radiator 12 is arranged on the top side frame 212, the coupling gap 13 is arranged on the side frame where the top side frame 212 is located, and a part of the first sub-radiator 11 is arranged corresponding to the top side frame 212, another part of the first sub-radiator 11 is arranged at the corner part 216, and another part of the first sub-radiator 11 is arranged at the side frame where the second side frame 215 is located. In other words, the radiator 10 is arranged at the corner part 216. Therefore, when the electronic device 1000 is held by a hand, the radiator 10 is less shielded, and the radiation efficiency of the radiator 10 is further improved.

In the antenna assembly 100 provided by the present disclosure, by designing the structure of the radiator 10 and the position of the grounding point A, multiple resonance modes are excited, and these resonance modes can implement ultra-wideband coverage, thereby implementing multi-band ENDC/CA performance, and improving download bandwidth, so that the throughput and the download speed can be improved, and user experience is improved. The multiple modes generated by the antenna assembly 100 of the present disclosure can be mutually enhanced, so that it can cover ultra-wide bandwidth with high efficiency, save cost, and is beneficial to meet the indicators of various operators.

The above description is part of the embodiments of the present disclosure, and it should be pointed out that for one of ordinary skill in the art, without departing from the principles of the present disclosure, several improvements and refinements can also be made, and these improvements and refinements are also considered as the protection scope of the present disclosure.

## Claims

1. An antenna assembly, comprising:
a radiator comprising a first sub-radiator and a second sub-radiator, wherein a coupling gap is between the first sub-radiator and the second sub-radiator, and the first sub-radiator and the second sub-radiator are coupled through the coupling gap; the first sub-radiator comprises a free end, a first coupling end, a grounding point and a feeding point; the grounding point and the feeding point are disposed between the free end and the first coupling end, the grounding point is grounded, and the feeding point is located between the grounding point and the first coupling end; and the second sub-radiator comprises a second coupling end and a grounding end, the coupling gap is formed between the second coupling end and the first coupling end, and the grounding end is grounded;
a first matching circuit, wherein one end of the first matching circuit is electrically connected to the feeding point; and
a signal source, wherein the signal source is electrically connected to the other end of the first matching circuit.

2. The antenna assembly as claimed in claim 1, wherein the first sub-radiator is configured to generate a first resonance mode under excitation of the signal source, the first sub-radiator and the second sub-radiator are configured to generate a second resonance mode under excitation of the signal source, and the first sub-radiator between the grounding point and the first coupling end and the second sub-radiator are configured to generate a third resonance mode under excitation of the signal source.

3. The antenna assembly as claimed in claim 2, wherein the first resonance mode supports a first frequency band, the second resonance mode supports a second frequency band, the third resonance mode supports a third frequency band; and the first frequency band, the second frequency band and the third frequency band are aggregated to form a target application frequency band.

4. The antenna assembly as claimed in claim 2, wherein a current corresponding to the first resonance mode flows from the first coupling end and the free end to the grounding point, a current corresponding to the second resonance mode flows from the grounding end to the grounding point and to the free end, and a current corresponding to the third resonance mode flows from the first coupling end to the grounding point and from the second coupling end to the grounding end.

5. The antenna assembly as claimed in claim 2, wherein the second resonance mode comprises a first sub-resonance mode and a second sub-resonance mode, the first sub-resonance mode is generated by the first sub-radiator under excitation of the signal source, and the second sub-resonance mode is generated by the second sub-radiator under capacitive coupling effect of the first sub-radiator.

6. The antenna assembly as claimed in claim 2, wherein a resonance frequency of the first resonance mode, a resonance frequency of the second resonance mode, and a resonance frequency of the third resonance mode increase in sequence.

7. The antenna assembly as claimed in claim 3, wherein the target application frequency band covers 1.6 GHz to 3 GHz; and/or, the target application frequency band supports an LTE 4G frequency band and a NR 5G frequency band.

8. The antenna assembly as claimed in any one of claims 1 to 7, wherein a length of a radiator between the grounding point and the free end is 1/8 to 3/4 times that of the first sub-radiator.

9. The antenna assembly as claimed in claim 8, wherein a length between the grounding point and the free end is 1/4 to 3/4 times that of the first sub-radiator.

10. The antenna assembly as claimed in claim 9, wherein the length between the grounding point and the free end is 3/8 to 5/8 times that of the first sub-radiator.

11. The antenna assembly as claimed in any one of claims 2 to 7, wherein a wavelength corresponding to a resonance frequency of the first resonance mode is a first wavelength, and a length of a radiator between the grounding point and the free end is 1/8 to 3/8 times that of the first wavelength.

12. The antenna assembly as claimed in claim 11, wherein a length of a radiator between the free end and the first coupling end is 1/4 to 3/4 times that of the first wavelength.

13. The antenna assembly as claimed in any one of claims 2 to 7, wherein a wavelength corresponding to a resonance frequency of the third resonance mode is a second wavelength, and a length of a radiator between the second coupling end and the grounding end is 1/8 to 3/8 times that of the second wavelength.

14. The antenna assembly as claimed in any one of claims 2 to 7, wherein the first matching circuit comprises a first sub-circuit electrically connected to the feeding point, and the first sub-circuit is capacitive when operating at a fourth frequency band; and the fourth frequency band is located in a frequency band corresponding to the first resonance mode, the second resonance mode and the third resonance mode.

15. The antenna assembly as claimed in any one of claims 2 to 7, wherein the first sub-radiator further comprises a first matching point between the free end and the grounding point;
the antenna assembly further comprises a second matching circuit, one end of the second matching circuit is electrically connected with the first matching point, and the other end of the second matching circuit is grounded.

16. The antenna assembly as claimed in claim 15, wherein the second matching circuit comprises a second sub-circuit electrically connected to the first matching point, the second sub-circuit is capacitive when operating in a fifth frequency band, and the fifth frequency band is in a frequency band corresponding to the first resonance mode and the second resonance mode.

17. The antenna assembly as claimed in any one of claims 2 to 7, wherein the second sub-radiator further comprises a second matching point between the second coupling end and the grounding end;
the antenna assembly further comprises a third matching circuit, one end of the third matching circuit is electrically connected with the second matching point, and the other end of the third matching circuit is grounded.

18. The antenna assembly as claimed in claim 17, wherein the third matching circuit comprises a third sub-circuit electrically connected to the second matching point, the third sub-circuit is capacitive when operating in a sixth frequency band, and the sixth frequency band is in a frequency band corresponding to the second resonance mode and the third resonance mode.

19. An electronic device, comprising:
a housing; and
the antenna assembly of any one of claims 1 to 18, wherein the radiator is disposed on or in the housing.

20. The electronic device as claimed in claim 19, wherein the housing comprises a plurality of side frames connected end to end, a connection position between two adjacent side frames is a corner part; the radiator is entirely disposed on the side frame; or one part of the radiator is disposed on at least one side frame, and the other part of the radiator is disposed on the corner part.
